# EUROPÄISCHE PATENTSCHRIFT

(11) **EP 0 614 843 B1**
(45) Veröffentlichungstag und Bekanntmachung des Hinweises auf die Patenterteilung: **21.05.1997**
(21) Anmeldenummer: 93103660.2
(22) Anmeldetag: 08.03.1993
(51) Int. Cl.: B66B 9/02

(54) **Antriebsvorrichtung einer selbstfahrenden Aufzugskabine**
Drive mechanism of a self-propelled elevator cabin
Mécanisme d'entraînement d'une cabine d'ascenseur automoteur

(43) Veröffentlichungstag der Anmeldung: 14.09.1994
(73) Patentinhaber: INVENTIO AG, CH-6052 Hergiswil NW (CH)
(72) Erfinder: Sager, Edmund, CH-6045 Meggen (CH)

(56) Entgegenhaltungen:
- CH-A- 318 565
- DE-A- 1 506 479
- DE-A- 3 000 659
- FR-A- 485 433
- FR-A- 1 086 189

## Beschreibung

Die vorliegende Erfindung betrifft eine Antriebsvorrichtung einer selbstfahrenden Aufzugskabine zwecks geradliniger Vorschubbewegung mittels Relativbewegung zwischen zwangsgeführten Rollen und schrägen Nuten, wobei ein Teil der Vorrichtung als Führung für die Kabine dient.

Dieses Prinzip für geradlinige Vorschubbewegung ist allgemein bekannt und wird in verschiedenen Ausführungsformen und für verschiedene Zwecke angewendet. Es ist naheliegend, dieses Vorschubprinzip für den Eigenantrieb einer Aufzugskabine einzusetzen, da einerseits diese Vorrichtung einen Teil der drehzahlreduzierenden Getriebeübersetzung übernehmen kann und anderseits bei Anwendung des Abwälzprinzipes minimale Schmierprobleme auftreten und ein guter Wirkungsgrad zu erwarten ist.

Aus der deutschen Patentschrift DE-A-30 00 659 ist eine solche Vorrichtung zur Ausübung einer geradlinigen Vorschubbewegung bekannt. Sie besteht aus einem drehbaren zylindrischen Teil, der am Umfang mehrere leerlaufende Rollen aufweist, die längs einer zur Achse des drehbaren Teils koaxialen Schraubenlinie angeordnet sind und einem feststehenden Teil, der auf einer entsprechenden Schraubenlinie eine Bahn für die Rollen aufweist.

Trotz der Abwälzbewegung zwischen Rollen und Nuten kann der Wirkungsgrad durch die grosse Anzahl der im Eingriff stehenden Rollen erheblich reduziert werden. Ferner werden die Rollen resp. die Führungsnuten in den Rollen sehr stark seitlich belastet, weil die vorgeschlagene Disposition eine sogenannte Rucksackanordnung zeigt. Aus diesem Grunde findet zwischen Rollen und Nuten eine relativ grosse seitliche Reibung statt. Daraus folgend können Schmierung und Verschleiss einen beachtenswerten Faktor bilden.

Der vorliegenden Erfindung liegt die Aufgabe zugrunde, eine Antriebsvorrichtung nach oben genanntem Prinzip für eine Aufzugskabine zu schaffen, die kostengünstiger herzustellen ist, bei welcher nicht mehr als zwei Rollen gleichzeitig im Eingriff sind, die ausschliesslich Abwälzbewegung ohne Seitenreibung aufweist, die für Wartung und Kontrolle besser zugänglich ist und die schachtseitig einfach herzustellende Teile aufweist.

Diese Aufgabe wird durch die in den Ansprüchen gekennzeichnete Erfindung gelöst und besteht im wesentlichen darin, dass beidseitig im Schacht je eine Rollenreihe auf einem Trägerprofil angeordnet ist und dass auf oder unter der Kabine von einem Antrieb betätigte Förderscheiben mit im Eingriff mit den festen Rollen stehende Spiralnuten vorhanden sind.

Die durch die Erfindung erreichten Vorteile sind im wesentlichen darin zu sehen, dass im Schacht normale Trägerprofile Lochreihen mit regelmässigen Abständen aufweisen, in welche einfache wälzgelagerte Normrollen eingesetzt werden und dass die Förderscheibe mit der Spiralnut als kostengünstiges Druckgussteil hergestellt werden kann und dass einfache U-Profilstücke als Führungsschuhe dienen können.

In den Zeichnungen ist ein Ausführungsbeispiel dargestellt und es zeigen
- Fig.1: eine Kabine mit dem erfindungsgemässen Antrieb,
- Fig.2: eine Förderscheibe in der Draufsicht,
- Fig.3: eine Förderscheibe in der Seitenansicht,
- Fig.4: eine Förderscheibe im Schnitt und im Eingriff mit Rollen,
- Fig.5: Rollen, Trägerprofil und Führungsschuh in der Seitenansicht,
- Fig.6: im Horizontalschnitt Rolle, Trägerprofil und Führungsschuh,
- Fig.7: eine Einzelheit eines Rollenbolzens und
- Fig.8: eine Anordnungsvariante der Förderscheiben.

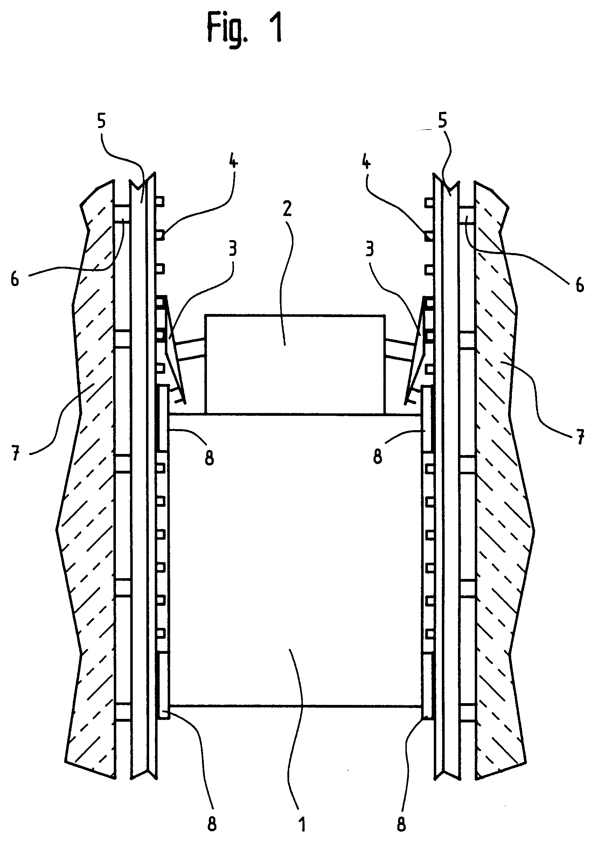

In der Fig.1 ist eine Kabine mit 1 und ein auf der Kabinenoberseite angeordnete Antriebseinheit mit 2 bezeichnet. Beidseitig der Antriebseinheit 2 ragen etwas schräg nach unten gerichtete Wellen mit Förderscheiben 3 heraus. Die Antriebseinheit 2 enthält nicht dargestellte Getriebeteile, eine Bremse und einen Antriebsmotor. Die Förderscheiben 3 befinden sich mit ihrer oberen Hälfte im Eingriff mit Rollen 4 welche ihrerseits in einer vertikalen Reihe und mit regelmässigen Abständen auf einem Trägerprofil 5 angeordnet sind. Das Trägerprofil 5 ist mit Haltern 6 an einer Schachtwand 7 befestigt. Mit 8 sind Führungsschuhe bezeichnet, welche sich unten und oben je seitlich an der Kabine 1 befinden und eine vertikale Länge aufweisen, welche mindestens zwei Rollen 4 überdeckt.

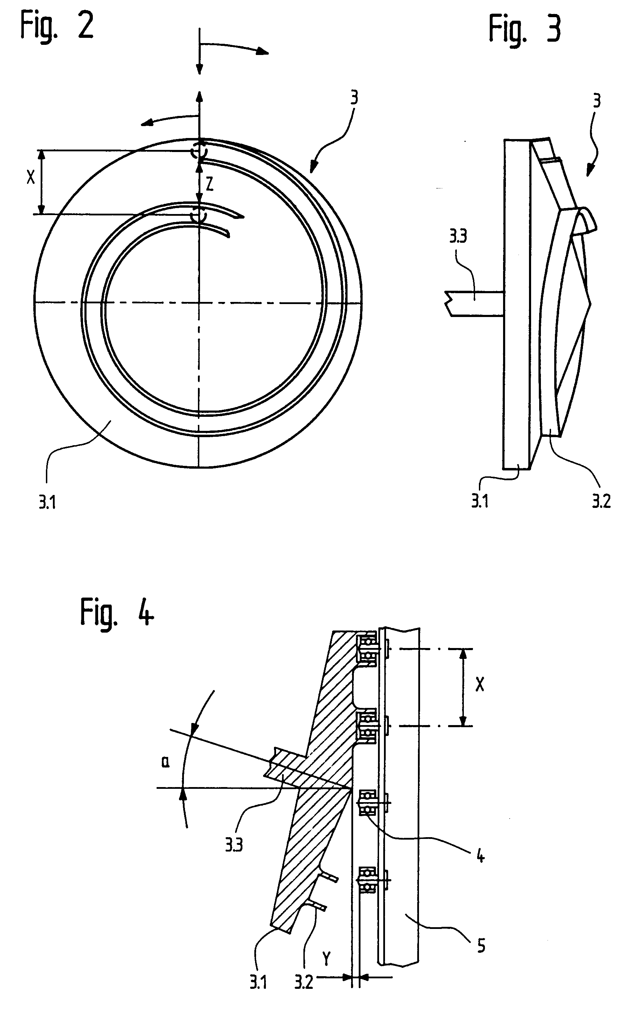

Die Fig.2 und 3 zeigen die Ausbildung der Förderscheibe 3 mit ihren Einzelheiten. Auf einer Kegelscheibe 3.1 ist eine Spiralnut 3.2 herausgeformt. Die Kegelscheibe 3.1 hat die Form eines stumpfwinkligen Kegels mit einer kurzen zylindrischen Randpartie und ist auf einer Welle 3.3 befestigt. Die herausgeformte Spiralnut 3.2 weist etwas mehr als einen ganzen Umgang auf und hat eine konstante Steigung pro Umgang im Betrage von "X". "Z" ist die Bezeichnung des Zwischenraumes zwischen zwei benachbarten Nutenwandaussenflächen. Die Spiralnut 3.2 beginnt am äusseren Rand der Kegelscheibe 3.1 und verläuft in der gezeigten Ausführung rechtsdrehend nach dem Zentrum. Die gestrichelt eingezeichneten Kreise in der Spiralnut 3.2 der Fig.2 bedeuten die Position von im Eingriff stehenden Rollen 4. Daraus ist ersichtlich, dass eine Linksdrehung der Förderscheibe 3 ihre Aufwärtsbewegung, und eine Rechtsdrehung ihre Abwärtsbewegung bewirkt, so, wie oberhalb mit Pfeilsymbolen dargestellt.

Die Fig.4 zeigt weitere Einzelheiten einer im Eingriff mit Rollen 4 sich befindliche Förderscheibe 3. Die Förderscheibe 3 resp. die Spiralnut 3.2 hat die gleiche Winkelposition wie jene in der Fig.2. In dieser Position ist je der Anfang und das Ende der Spiralnut 3.2 momentan im Eingriff mit je einer Rolle 4. Da eine Spirale generell am ganzen Umfang drehrichtungsabhängig nach innen oder nach aussen läuft, darf sich in der gezeigten Anwendung nur eine Halbkreisteil in der Eingriffszone befinden. Der untere Halbkreisteil der Förderscheibe 3 ist deshalb distanziert von den Rollen 4 und es findet so kein Eingriff mit Rollen 4 im unteren Halbkreisteil der Förderscheibe 3 statt. Aus diesem Grunde ist die Förderscheibe 3 resp. die Spiralnut 3.2 auf einer Kegelscheibe 3.1 und nicht auf einer flachen Scheibe angeordnet, und weist die Achse 3.3 der Förderscheibe 3 einen Winkel "a" zur Horizontalen auf, so dass die Kegelflanke des im Eingriff mit Rollen 4 sich befindlichen Teiles der Förderscheibe 3 parallel zur Vertikalen verläuft. Die vertikale Kegelflanke weist zudem noch einen Sicherheitsabstand "Y" zu den Stirnseiten der Rollen 4 auf. Die Rollen 4 sind in einem Abstand "X", welcher der Steigung der Spirale entspricht, in vertikaler Linie in einem Trägerprofil 5 montiert.

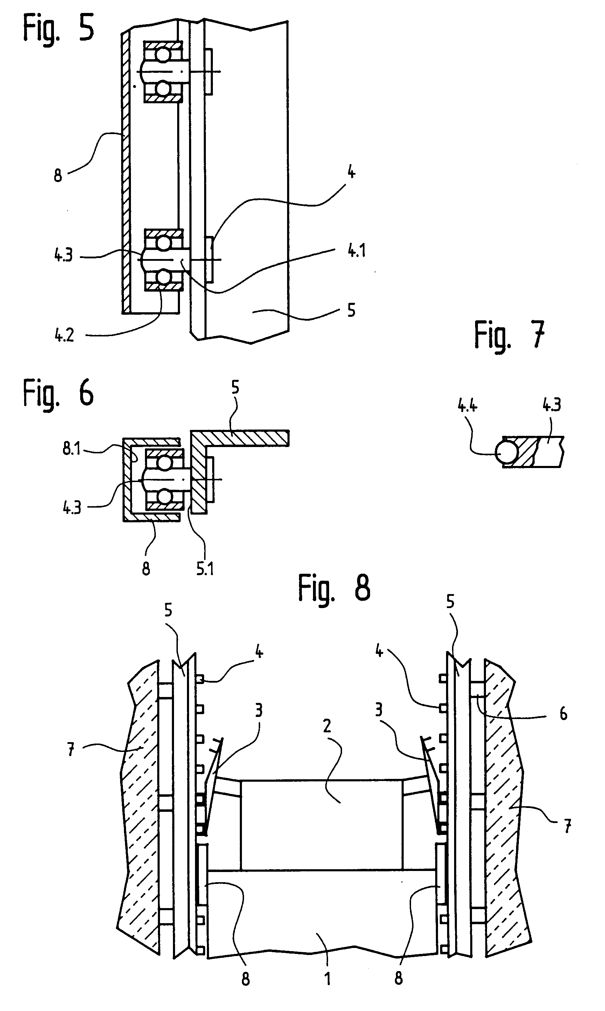

In den Fig.5 und 6 ist die Konstruktion der Rolle 4 ersichtlich. Es ist der Rollenbolzen mit 4.1 und der auf diesem kugelgelagerte Rollenring mit 4.2 bezeichnet. Der Rollenbolzen 4.1 weist eine gegenüber dem Rollenring 4.2 etwas vorstehende und gerundete Stirnfläche 4.3 auf. Ein Führungsschuh 8 hat eine Länge von mindestens dem zweifachen Betrag des Abstandes "X", so dass immer mindestens zwei Rollen 4 überdeckt werden. Der Führungsschuh 8 ist als U-Profil ausgebildet mit einer lichten Weite, die beispielsweise 1 mm grösser als der Durchmesser des Rollenringes 4.2 ist. Die Höhe der Seitenschenkel des Führungsschuhes 8 entsprechen beispielsweise der Breite des Rollenringes 4.2. Der Abstand zwischen der Stirnfläche 4.3 und der Innenfläche 8.1 des U-Profils resp. des Führungsschuhs 8 ist kleiner als der Zwischenraum zwischen Schenkelstirnseiten und einer Oberfläche 5.1 des Trägerprofiles 5, so dass es nie zu einer Berührung des Führungsschuhs 8 mit dem Trägerprofil 5 kommt. Die gerundete Stirnfläche 4.3 ist vorzugsweise bezüglich Materialhärt und Oberflächengüte für eine leicht geschmierte Gleitreibung auf der Innenfläche 8.1 des Führungsschuhs 8 dimensioniert.

Gemäss Fig.7 kann diese Gleitreibung zuätzlich auf ein Minimunm reduziert werden, wenn stirnseitig des Rollenbolzens 4.3 eine reibungsarm gelagerte Rollkugel 4.4 vorgesehen wird.

Die Funktion der erfindungsgemässen Einrichtung ist weitgehend aus der vorangegangenen Teilebeschreibung ersichtlich und wird im folgenden mit weiteren Einzelheiten beschrieben. Durch die Ausbildung der Förderscheibe 3 und ihr Eingriff mit den Rollen 4 wird die Kabine 1, je nach Drehrichtung der Förderscheiben 3, gehoben oder gesenkt. Die Steigung der Spiralnut 3.2 entspricht dem Hub pro Umdrehung der Förderscheiben 3. Eine kleine Steigung "X" ergibt einen grösseren, drehzahlreduzierenden Uebersetzungsfaktor, bedingt aber auch eine grössere Anzahl Rollen 4 und umgekehrt ergibt eine grosse Steigung "X" entsprechend mehr Fahrweg pro Umdrehung der Förderscheibe 3. Die Herstellung der Förderscheibe 3 kann für kleine Stückzahlen auf einer numerisch gesteuerten Fräsmaschine problemlos gefertigt werden, da ihre Ausbildung mit klassischen Formeln beschrieben werden kann. Für grössere Stückzahlen bieten sich verschiedene Gusstechniken an. Die Förderscheibe 3 kann in weiteren Varianten Spiralnuten 3.2 mit mehreren Umgängen aufweisen.

In einer speziellen Variante können die Nutbreite und der Zwischenraum "Z" zwischen zwei benachbarten Nutwandaussenflächen gleich gross sein. Das ergibt den Effekt einer doppelgängigen Spiralnut 3.2 und die Möglichkeit, mit paarweise angeordneten Rollen 4 eine doppelte Belastbarkeit zu erhalten. Diese Rollenpaare hätten unter sich einen Abstand resp. Zwischenraum welcher der Nutwanddicke entspricht und von Rollenpaar zu Rollenpaar einen Abstand welcher der Steigung "X" der Spiralnut 3.2 entspricht.

Die in der Antriebseinheit 2 verwendeten und nicht dargestellten Komponenten sind normale Maschinenelemente und bestehen im wesentlichen aus Getriebemotor, Bremse, Kupplung, Wellen und Wälzlagern. Die elektrische Energie zur Speisung des Antriebes kann entweder aus bordeigenem Speicher, mittels Kabel oder Schleifleitung zugeführt werden.

Wie Fig.8 zeigt, ist auch eine umgekehrte Anordnung der Förderscheiben 3 möglich, indem der Winkel "a" positiv zur Horizontalen gewählt wird, wodurch die untere Förderscheibenhälfte resp. die Spiralnut 3.2 in dieser Hälfte zum Eingriff mit den Rollen 4 kommt. Diese Anordnungsvariante ergibt unter Umständen eine reduzierte Bauhöhe und/oder einfachere Konstruktion der Antriebseinheit 2 und bietet sich auch bei einer Antriebsanordnung unterhalb der Kabine 1 an.

Eine ebenfalls nicht dargestellte Fangvorrichtung bekannter Bauart erfüllt die üblichen Sicherheitsvorschriften. Ebenso besitzt die Kabine nicht dargestellte weitere aufzugsübliche Zusatzausrüstungen wie Kabinensteuerung, automatische Türen, Anzeige- und Kommunikationseinrichtungen. Zur Geräuschminderung wird die Antriebseinheit 2 über nicht dargestellte vibrationsdämpfende Elemente mit dem Kabinenkörper verbunden. Die Antriebseinheit 2 kann auch unterhalb der Kabine 1 angeordnet werden. Ferner ist für grössere Hublasten die Verwendung von zwei Antriebseinheiten 2, je eine oberhalb und unterhalb der Kabine 1, vorgesehen.

Die Führungsschuhe 8 sind, wie bereits erwähnt, als normale U-Profile ausgebildet. Die Länge dieser Führungsschuhe 8 wird so gewählt, dass in jeder Kabinenlage mindestens zwei Rollen 4 erfasst werden. Die stirnseitigen Ein- und Auslaufstellen dieses U-Profiles werden vorzugweise etwas angeschrägt, um einen stossfreien Ein- und Auslauf der Rollen 4 zu ermöglichen. Die Führungsschuhe 8 sind in üblicher Weise etwas gelenkig und elastisch gelagert, um Geräusch und Vibration von der Kabine fernzuhalten

Die beidseitige Anordnung der Förderscheiben 3 bedingt, dass die Spiralnuten 3.2 der beiden Förderscheiben 3 bei gleichem Drehsinn der Wellen 3.3 ungleichen Drehsinn aufweisen müssten, was die Herstellung von zwei verschiedenen Förderscheibentypen erfordern würde. Es wird deshalb vorgesehen, dass die aus der Antriebseinheit 2 austretenden Wellen 3.3 zueinander entgegengestzten Drehsinn aufweisen. Welchen Drehsinn die Spiralnuten 3.2 aufweisen, links oder rechts herum, ist für deren Funktion nicht von Bedeutung.

Der Antrieb der Förderscheiben 3 kann in einer weiteren Variante direkt mit Hydraulikmotoren erfolgen, wobei das zugehörige Hydrauliksystem mit Pumpe, Motor, Tank und Ventile dezentral an geeigneter Stelle an der Kabine 1 untergebracht werden kann.

## Patentansprüche

1. Antriebsvorrichtung einer selbstfahrenden Aufzugskabine zwecks geradliniger Vorschubbewegung mittels Relativbewegung zwischen zwangsgeführten Rollen und schrägen Nuten, wobei ein Teil der Vorrichtung als Führung für die Kabine dient
dadurch gekennzeichnet,
dass eine von einer Antriebseinheit (2) an einer Aufzugkabine (1) angetriebene Förderscheibe (3) mit einer, mit festen Rollen (4) im Eingriff stehende, beim Drehen der Förderscheibe (3) drehrichtungsabhängig eine Hub- oder Senkbewegung der Kabine bewirkende Spiralnut (3.2) vorhanden ist und die Spiralnut (3.2) auf der Mantelfläche einer Kegelscheibe 3.1 ausgeformt ist.

2. Antriebsvorrichtung nach Anspruch 1
dadurch gekennzeichnet,
dass die Achse der Förderscheibe (3) einen, eine Parallelität der Kegelflanke mit dem im Eingriff mit den Rollen (4) stehenden Teil der Spiralnut (3.2) bildenden Winkel "a" zur Horizontalen aufweist.

3. Antriebsvorrichtung nach Anspruch 1
dadurch gekennzeichnet,
dass die Spiralnut (3.2) mindestens einen Umgang aufweist.

4. Antriebsvorrichtung nach Anspruch 1
dadurch gekennzeichnet,
dass der Zwischenraum "Z" zwischen benachbarten Spiralnutaussenwänden gleich gross wie die Nutweite der Spiralnut (3.2) dimensioniert ist.

5. Antriebsvorrichtung nach Anspruch 1
dadurch gekennzeichnet,
dass der Zwischenraum "Z" zwischen benachbarten Spiralnutaussenwänden ungleich gross wie die Nutweite der Spiralnut (3.2) diemensioniert ist.

6. Antriebsvorrichtung nach Anspruch 1
dadurch gekennzeichnet,
dass die Rollen (4) in, der Steigung "X" der Spiralnut (3.2) entsprechenden Abständen auf einem Trägerprofil (5) angeordnet sind.

7. Antriebsvorrichtung nach Anspruch 1 und 6
dadurch gekennzeichnet,
dass der Rollenbolzen (4.1) eine gegenüber dem Rollenring (4.2) vorstehende, bombierte Stirnfläche (4.3) aufweist.

8. Antriebsvorrichtung nach Anspruch 1 und 6
dadurch gekennzeichent,
dass der Rollenbolzen (4.1) stirnseitig eine gegenüber dem Rollenring (4.2) vorstehende Rollkugel (4.4) aufweist.

9. Antriebsvorrichtung nach Anspruch 1 und 6
dadurch gekennzeichnet,
dass Rollen (4) paarweise, mit einem Abstand untereinander welcher der Nutwanddicke der Spiralnut (3.2) entspricht und die Rollenpaare mit einem Abstand zueinander welcher der Steigung "X" der Spiralnut (3.2) entspricht, angeordnet sind.

10. Antriebsvorrichtung nach Anspruch 1
dadurch gekennzeichnet,
dass, die Kabine in der horizontalen Ebene führende, mindestens je zwei aufeinanderfolgende Rollen erfassende Führungsschuhe (8) vorhanden sind.

11. Antriebsvorrichtung nach Anspruch 1 und 10
dadurch gekennzeichnet,
dass die Führungsschuhe (8) angeschrägte Ein- und Auslauföffnungen aufweisen.

## Claims

1. Drive device of an automatic lift cage, for the purpose of rectilinear advancing movement by means of relative movement between constrainedly guided rollers and inclined grooves, wherein a part of the device serves as guide for the cage, characterised thereby that a hoisting pulley (3) driven by a drive unit (2) at a lift cage (1) stands in engagement with fixed rollers (4), a spiral groove (3.2) effecting raising movement or lowering movement of the cage in dependence on rotational direction during rotation of the hoisting pulley (3) is present and the spiral groove (3.2) is shaped on the envelope surface of a cone pulley (3.1).

2. Drive device according to claim 1, characterised thereby that the axis of the housing pulley (3) has an angle "a", which forms a parallelism of the cone flank with the part of the spiral groove (3.2) standing in engagement with the rollers (4), relative to the horizontal.

3. Drive device according to claim 1, characterised thereby that the spiral groove (3.1) has at least one revolution.

4. Drive device according to claim 1, characterised thereby that the intermediate space "Z" between adjacent spiral groove outer walls is dimensioned to be the same size as the groove width of the spiral groove (3.2).

5. Drive device according to claim 1, characterised thereby, that the intermediate space "Z" between adjacent spiral groove outer walls is dimensioned to be of different size from the groove width of the spiral groove (3.2).

6. Drive device according to claim 1, characterised thereby that the rollers (4) are arranged on a support profile section (5) at spacings corresponding to the inclination "X" of the spiral groove (3.2).

7. Drive device according to claim 1 and 6, characterised thereby that the roller pins (4.1) have a convex end face (4.3) which projects relative to the roller circumference (4.2).

8. Drive device according to claim 1 and 6, characterised thereby that the roller pins (4.1) have at the end a roller ball (4.4) which projects relative to the roller circumference (4.2).

9. Drive device according to claim 1 and 6, characterised thereby that rollers (4) are arranged in pairs with a mutual spacing which corresponds to the groove wall thickness of the spiral groove (3.2) and the roller pairs are arranged with a spacing relative to one another which corresponds to the inclination "X" of the spiral groove (3.2).

10. Drive device according to claim 1, characterised thereby that guide shoes (8) are present, which guide the cage in the horizontal plane and each embrace at least two successive rollers.

11. Drive device according to claim 1 and 10, characterised thereby that the guide shoes (8) have bevelled inlet and outlet openings.

## Revendications

1. Mécanisme d'entraînement d'une cabine d'ascenseur automotrice en vue d'un mouvement d'avance rectiligne à l'aide d'un mouvement relatif entre des galets à guidage forcé et des rainures inclinées, une partie du mécanisme servant de guidage pour la cabine,
caractérisé en ce qu'il est prévu une poulie de transport (3) entraînée par une unité d'entraînement (2) au niveau d'une cabine d'ascenseur (1) et pourvue d'une rainure en spirale (3.2) qui est en prise avec des galets fixes (4) et qui provoque, lors de la rotation de la poulie de transport (3), un mouvement ascendant ou descendant de la cabine, suivant le sens de rotation, et la rainure en spirale (3.2) est formée sur la surface latérale d'une poulie conique (3.1).

2. Mécanisme d'entraînement selon la revendication 1, caractérisé en ce que l'axe de la poulie de transport (3) présente par rapport à l'horizontale un angle "a" qui définit un parallélisme entre le flanc du cône et la partie de la rainure en spirale (3.2) en prise avec les galets (4).

3. Mécanisme d'entraînement selon la revendication 1, caractérisé en ce que la rainure en spirale (3.2) présente au moins une circonvolution.

4. Mécanisme d'entraînement selon la revendication 1, caractérisé en ce que la taille de l'intervalle "Z" entre les parois extérieures de rainure en spirale voisines est égale à la largeur de la rainure (3.2).

5. Mécanisme d'entraînement selon la revendication 1, caractérisé en ce que la taille de l'intervalle "Z" entre les parois extérieures de rainure en spirale voisines est différente de la largeur de la rainure (3.2).

6. Mécanisme d'entraînement selon la revendication 1, caractérisé en ce que les galets (4) sont disposés sur un profilé de support (5) suivant des écartements qui correspondent au pas "X" de la rainure en spirale (3.2).

7. Mécanisme d'entraînement selon les revendications 1 et 6, caractérisé en ce que l'axe de galet (4.1) présente une surface frontale (4.3) bombée et saillante par rapport à la bague de galet (4.2).

8. Mécanisme d'entraînement selon les revendications 1 et 6, caractérisé en ce que l'axe de galet (4.1) présente, côté frontal, une bille de galet (4.4) saillante par rapport à la bague de galet (4.2).

9. Mécanisme d'entraînement selon les revendications 1 et 6, caractérisé en ce que les galets (4) sont disposés par paires et séparés par une distance qui correspond à l'épaisseur de la paroi de la rainure en spirale (3.2), tandis que les paires de galets sont séparées par une distance qui correspond au pas "X" de la rainure en spirale (3.2).

10. Mécanisme d'entraînement selon la revendication 1, caractérisé en ce qu'il est prévu des sabots de guidage (8) qui guident la cabine dans le plan horizontal et qui couvrent chacun au moins deux galets successifs.

11. Mécanisme d'entraînement selon les revendications 1 et 10, caractérisé en ce que les sabots de guidage (8) présentent des ouvertures d'entrée et de sortie inclinées.
